(19) Europäisches Patentamt
European Patent Office
Office européen des brevets

(11) Numéro de publication: **0 392 941 A1**

(12) **DEMANDE DE BREVET EUROPEEN**

(21) Numéro de dépôt: **90420174.6**

(51) Int. Cl.5: **C04B 35/58, C08G 79/08**

(22) Date de dépôt: **05.04.90**

(30) Priorité: **13.04.89 FR 8905177**

(43) Date de publication de la demande:
**17.10.90 Bulletin 90/42**

(84) Etats contractants désignés:
**AT BE CH DE DK ES FR GB GR IT LI LU NL SE**

(71) Demandeur: **RHONE POULENC CHIMIE**
**25 Quai Paul Doumer**
**F-92408 Courbevoie Cédex(FR)**

(72) Inventeur: **Ardaud, Pierre**
**133 avenue Clémenceau**
**F-69110 Sainte-Foy-les-Lyon(FR)**
Inventeur: **Mignani, Gérard**
**2, avenue des Frères Lumière**
**F-69008 Lyon(FR)**

(74) Mandataire: **Seugnet, Jean Louis et al**
**RHONE-POULENC CHIMIE Service Brevets**
**Chimie Centre de Recherches des Carrières**
**B.P. 62**
**F-69192 Saint-Fons Cédex(FR)**

(54) **Utilisation de polymères à base de bore et d'azote comme précurseurs de céramiques à base de nitrure de bore et produits céramiques ainsi obtenus.**

(57) Selon l'invention les polymères à base de bore et d'azote précurseurs de nitrure de bore sont obtenus par addition d'au moins un trihalogénoborane sur un excès molaire d'au moins un composé silazane présentant au moins un groupement ≡Si - NH - Si≡.

Le trihalogénoborane peut être coulé dans le réacteur en même temps que le composé silazane ou sur pied silazane. La réaction peut être effectuée à température ambiante.

L'invention vise l'utilisation des polymères obtenus à l'obtention de céramique à base de nitrure de bore par pyrolyse de ces polymères à une température comprise entre 1 000° C et 2 000° C.

EP 0 392 941 A1

# UTILISATION DE POLYMERES A BASE DE BORE ET D'AZOTE COMME PRECURSEURS DE CERAMIQUES A BASE DE NITRURE DE BORE ET PRODUITS CERAMIQUES AINSI OBTENUS

L'invention a trait à l'utilisation de polymères organométalliques à base de bore et d'azote comme précurseurs de céramiques par pyrolyse de ces polymères à une température comprise entre 1 000 et 2 000 °C.

Elle concerne donc, à titre d'application, l'utilisation de ces polymères pour la fabrication de produits et articles céramiques à base de nitrure de bore, notamment sous forme de fibres.

On sait que le nitrure de bore est un matériau de plus en plus recherché, en raison notamment de sa stabilité aux hautes températures, de sa résistance aux chocs thermiques, de sa grande inertie chimique et de sa très bonne conductivité thermique. D'autre part, sa faible conductivité électrique en fait un isolant de choix.

On connait à l'heure actuelle divers procédés pour préparer du nitrure de bore.

L'un d'entre eux consiste à faire réagir en phase gazeuse du trichlorure de bore avec de l'ammoniac. On obtient ainsi une poudre fine de nitrure de bore, qu'il est possible de fritter pour obtenir des pièces massives. Toutefois, les pièces obtenues présentent une microporosité qui peut être très gênante pour certaines applications.

Plus récemment, on a découvert qu'il était possible de préparer du nitrure de bore par pyrolyse de polymères précurseurs.

L'intérêt de la voie polymère réside surtout dans les possiblités de mise en forme de ce type de produit, et plus particulièrement pour l'obtention, après pyrolyse, de fibres en nitrure de bore.

On a ainsi décrit dans le brevet US 4.581.468 un polymère organoborique qui est obtenu par action de l'ammoniac (ammonolyse) sur un trichloro-trialkylsilyl-borazole (composé cyclique), et qui, indique-t-on, permet d'aboutir, après filage puis pyrolyse à 970 °C, à des fibres de nitrure de bore.

Toutefois, le composé cyclique de départ décrit dans ce document est très difficile à préparer, donc coûteux, et, de ce fait, ne peut guère laisser espérer d'application à l'échelle d'une production industrielle.

Dans la demande de brevet français 2 620 455 on utilise comme polymère précurseur le produit de réaction d'un mélange de trihalogénoborane et d'un composé présentant au moins un atome de bore sur lequel sont directement liés deux atomes d'halogène, sur un composé comprenant au moins un groupe $NH_2$.

A partir de ce polymère précurseur, la demande de brevet français 2 620 443 enseigne que la pyrolyse de ce précurseur sous ammoniac conduit à un produit céramique essentiellement à base de nitrure de bore.

La publication de K.A. ANDRIANOV, Bulletin of the Academy of Science, USSR, 1962, 3, P. 1757-1758 enseigne un procédé consistant à introduire un trihalogénoborane de formule $BX_3$ dans un hexaalkyldisilazane de formule $(R_3Si)_2NH$ pour conduire à un trialkylsilylaminodihalogénoborane de formule $R_3SiNHBX_2$ ; ce dernier produit n'est qu'un simple monomère organoboré, et il ne peut en aucun cas constituer, en tant que tel, un précurseur de nitrure de bore convenable.

La demande de brevet français 88/13 111 déposée le 6 octobre 1988 au nom de la demanderesse enseigne que le problème précurseur peut être avantageusement obtenu par réaction entre un trihalogènoborane et un composé silazane présentant un groupement ≡Si-NH-Si≡.

Ce procédé a permis de faire un progrès important dans la mesure où il met en oeuvre deux produits de départ commercialement disponibles que l'on peut faire réagir en une seule étape. Il présente toutefois une double contrainte :

- le milieu réactionnel doit être maintenu à une température comprise entre -100 °C et 0 °C,
- le composé silazane doit être introduit progressivement sur un pied de trihalogènoborane.

Un but de la présente invention est de proposer un précurseur de céramique à base de bore et d'azote qui soit préparé par un procédé simple et peu coûteux.

Un autre but de la présente invention est qu'un tel procédé fasse intervenir des produits de départ peu coûteux, commercialement disponibles.

Un autre but de la présente invention est qu'un tel procédé puisse être mis en oeuvre à température ambiante.

Un autre but de la présente invention est de proposer un précurseur céramique à base de bore et d'azote obtenu par un tel procédé qui permette d'obtenir après pyrolyse, un matériau céramique de forme quelconque présentant de bonnes propriétés avec des rendements pondéraux satisfaisants.

Ces buts et d'autres sont atteints par la présente invention qui concerne en effet un procédé de préparation de produits céramiques à base de nitrure de bore, caractérisé en ce qu'il consiste à pyrolyser à une température comprise entre 1 000 et 2 000 °C, un polymère à base de bore et d'azote obtenu par réaction dans un réacteur d'au moins un composé silazane (A) présentant au moins un groupement ≡Si-NH-Si≡ par molécule sur au moins un trihalogènoborane (B), suivant un rapport molaire Ra nombre d'équivalent-gramme de groupement ≡Si-NH-Si≡ de (A) sur nombre de moies de (B) supérieur ou égal à 2, (B) étant coulé progressivement à la totalité de (A) déjà dans le réacteur ou (B) étant coulé simultanément avec (A) dans le réacteur.

D'autres caractéristiques, aspects et avantages de l'invention apparaitront encore plus complètement à la lecture de la description qui va suivre, et des exemples concrets, mais non limitatifs, relatifs à sa mise en oeuvre.

Le trihalogénoborane (B) de départ généralement utilisé dans le présent procédé est le trichloroborane, bien que tout autre halogénoborane puisse convenir, comme par exemple un trifluoro-, un tribromo- ou un triiodoborane.

Les composés silazanes (A) présentant au moins un groupement ≡Si-NH-Si≡ utilisés dans le présent procédé sont des produits bien connus se présentant sous forme de monomères, d'oligomères et de polymères cycliques ou linéaires, et qui peuvent être préparés suivant une large variété de procédés à partir d'une gamme étendue de produits de départ, notamment par ammonolyse ou aminolyse d'un ou plusieurs organochlorosilanes, c'est à dire par réaction entre (a) au moins un organohalogénosilane de formule :

$R_a X_{4-a}Si$

dans laquelle les radicaux R, identiques ou différents, sont choisis parmi l'hydrogène et les radicaux hydrocarbonés, éventuellement substitués, a représente 0,1, 2 ou 3, et (b) au moins un composé comportant au moins un groupement $NH_2$ ou NH comme par exemple l'ammoniac et les amines primaires ou secondaires.

Sont ainsi plus particulièrement utilisables dans le présent procédé les composés silazanes du type :

1.- polymères linéaires de formules (I) ou (II) :

$H_2N(R_2\ SiNH)_p\ SiR_2NH_2$ (I)

$R_3SiNH(R_2\ SiNH)_{p'}\ SiR_3$ (II)

dans lesquelles les radicaux R, identiques ou différents, sont choisis de préférence parmi l'hydrogène et les radicaux alkyles, cycloalkyles, aryles, alkylaryles et arylalkyles ; p et p' sont des nombres entiers pouvant être compris entre 1 et 1 000, de préférence entre 3 et 300. (Voir par exemple les brevets FR-A-1 086 932 et US-A-2 564 674).

2.- les polymères cycliques de formule (III) :

$(R_2SiNH)_n$ (III)

dans laquelle les radicaux R, identiques ou différents, sont choisis de préférence parmi l'hydrogène et les radicaux alkyles, cycloalkyles, aryles, alkylaryles et arylalkyles ; n est un nombre entier compris entre 3 et 10, de préférence égal à 3 ou 4 (voir par exemple le brevet GB-A-881 178).

Selon un mode préférentiel de réalisation de la présente invention, le composé silazane utilisé est un disilazane.

Les disilazanes utilisés dans le présent procédé sont des produits bien connus de l'état de la technique, et qui peuvent être préparés selon tout moyen connu en soi ou bien encore trouvés dans le commerce.

Ces produits répondent à la formule générale (IV) :

$(R_3Si)_2NH$ (IV)

dans laquelle les radicaux R, identiques ou différents, sont choisis parmi l'hydrogène et les radicaux hydrocarbonés, éventuellement substitués.

Les radicaux hydrocarbonés préférés sont les radicaux alkyles, cycloalkyles, alcènyles, aryles, alkylaryles et arylalkyles.

Parmi les radicaux alkyles convenant pour la présente invention, on peut citer à titre d'exemples les radicaux méthyle, éthyle, propyle, butyle, pentyle, hexyle, heptyle et octyle. Parmi les radicaux cycloalkyles, on peut citer les radicaux cyclopentyle, cyclohexyle et cycloheptyle. Comme radical alcènyle : le radical vinyle. A titre de radicaux aryles : les radicaux phényle et naphtyle ; de radicaux alkylaryles : les radicaux tolyle et xylyle ; et enfin de radicaux arylalkyles : les radicaux benzyle et phényléthyle.

Des exemples de composés disilazanes, pris seuls ou en mélange, envisagés par l'invention sont :

$\{(CH_3)_3Si\}_2NH$, $\{C_6H_5(CH_3)_2Si\}_2NH$,

$\{(C_6H_5)_2CH_3Si\}_2NH$,

$\{(CH_3)_2\overset{\overset{H}{|}}{Si}\}_2NH$,

$\{(CH_3)_2(CH_2 = CH)Si\}_2NH$.

Selon un mode préférentiel de réalisation de l'invention, on utilise des hexaalkyldisilazanes.

L'hexamethyldisilazane convient particulièrement bien.

Les quantités de réactifs à mettre en jeu dans le présent procédé jouent un rôle important. Comme déjà indiqué, le silazane (A) et le trihalogènoborane (B) sont utilisés en des quantités telles que le rapport Ra du nombre d'équivalent-gramme de groupement ≡Si-NH-Si≡ de (A) sur le nombre de moles de (B) doit être égal ou supérieur à 2. Dans le cas où le silazane est un disilazane de formule (IV), Ra est un simple rapport molaire de préférence d'au moins 2,1. Il a en effet été constaté, entre autres, que plus ce rapport augmente et plus la teneur en chlore résiduel du polymère obtenu en fin de réaction diminue. Cette teneur résiduelle en chlore est inférieure à 0,5 % en poids. De préférence enfin, ce rapport n'excède pas 6 car il a été trouvé qu'un trop fort excès en composé silazane pouvait conduire à des produits de masses moléculaires trop faibles, donc peu utilisables comme précurseurs de céramique. Selon l'invention, un

rapport Ra compris entre 2,1 et 5 convient donc plus particulièrement.

Un rapport (A)/(B) inférieur à 2 conduit, après réaction incomplète, à la formation d'un gel plus ou moins solide. La filtration est alors très difficile. Le produit obtenu contient du chlore résiduel à une teneur supérieure à 0,5 % en poids et ne conduit pas à un produit céramique satisfaisant.

Selon une première variante du procédé selon l'invention, le composé trihalogènoborane est introduit dans le silazane déjà présent dans le réacteur. Cette première variante est déjà illustrée par la publication de Richard L. WELLS et Alva L. COLLINS dans INORG. NUCL. CHEM. LETTERS 1966, vol. 2, n° 7, pages 201-204. Cette introduction, par opposition à un mélange entre réactifs de type quasi-instantané, se fait progressivement, c'est-à-dire que la coulée du trihalogènoborane dans le silazane est réalisée sur une durée plus ou moins étalée dans le temps ; pratiquement, selon les quantités de réactifs mises en jeu, cette durée peut varier de quelques minutes à plusieurs heures.

Il faut noter ici que l'introduction du trihalogènoborane (B), pour un Ra de départ donné, peut être réalisée selon deux variantes différentes mais néanmoins équivalentes : cette introduction peut être en effet réalisée soit en effectuant une seule étape réactionnelle (procédé continu) soit en effectuant plusieurs étapes réactionnelles (procédé discontinu).

Ainsi, de manière plus précise et à titre purement illustratif, si l'on désire faire réagir une mole de trihalogénoborane et trois moles de disilazane, deux voies sont pratiquement possibles :

- la première consiste à introduire en une seule étape une mole de trihalogénoborane dans les 3 moles de disilazane, puis à récupérer le polymère formé ;
- la deuxième consiste dans une première étape à introduire par exemple une 1/2 mole de trihalogénoborane dans le disilazane, puis à récupérer le produit formé et, dans une deuxième étape, à introduire la 1/2 mole restante de trihalogénoborane dans le produit récupéré précédemment, et ceci dans des conditions pratiques identiques à une introduction en continu, puis à récupérer le nouveau polymère formé.

Selon une deuxième variante du procédé de l'invention, le composé (B) trihalogénoborane est introduit simultanément dans le réacteur avec le silazane (A) et, de préférence, suivant la même durée.

Cette introduction peut, comme pour la première variante, être réalisée soit en effectuant une seule étape réactionnelle, soit en effectuant plusieurs étapes réactionnelles.

La réaction peut avoir lieu à la pression atmosphérique, bien que des pressions inférieures ou supérieures ne soient bien évidemment pas exclues.

La réaction entre le trihalogénoborane et le silazane peut être opérée en masse ou, de préférence, en solution dans un solvant organique de type aprotique (hexane, pentane, toluène, chlorobenzène, etc...) et sous conditions anhydres.

La température du mélange réactionnel n'est pas un paramètre critique, elle peut être comprise entre -50 °C et la température de reflux du solvant utilisé. Suivant la première variante, il est recommandé d'effectuer la coulée de (B) dans (A) à une température comprise entre -50 °C et -5 °C. La coulée (B) terminée, la réaction peut être poursuivie à une température comprise entre la température ambiante et la température de reflux du solvant.

Selon la deuxième variante, la coulée simultanée de (A) et (B) peut être effectuée directement à la température ambiante et la réaction à une température comprise entre la température ambiante et la température de reflux du solvant utilisé.

Il peut être également avantageux, pour mieux structurer le polymère formé et augmenter ainsi les rendements lors de la pyrolyse ultérieure, de chauffer le milieu réactionnel, par exemple en le portant à la température de reflux du solvant, et ceci sur une durée pouvant aller de quelques minutes à plusieurs heures.

A l'issue de cette étape réactionnelle, on sépare le polymère du milieu de réaction, et ceci par tout moyen connu en soi, par exemple par filtration sous atmosphère inerte, ou bien encore par extraction et décantation au moyen notamment d'ammoniac liquide.

Le polymère ainsi récupéré, après éventuellement élimination du solvant (distillation ou autre), puis séchage, constitue alors le précurseur polymère qui peut être pyrolysé.

On peut, dans une étape ultérieure, et selon un mode particulier et préféré de l'invention, traiter le polymère ainsi obtenu avec un composé de formule :

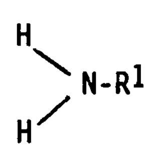

dans laquelle $R^1$ représente l'atome d'hydrogène ou un radical alkyle.

On utilisera de préférence comme composé l'ammoniac ($R^1$ = H).

Ce traitement a notamment pour but de diminuer le taux de silicium dans le polymère et de réticuler le polymère obtenu afin d'augmenter le rendement en nitrure de bore. Sans vouloir lier cet

aspect particulier de l'invention à une théorie scientifique, il est probable que la réaction chimique mise en jeu au cours de ce traitement est :

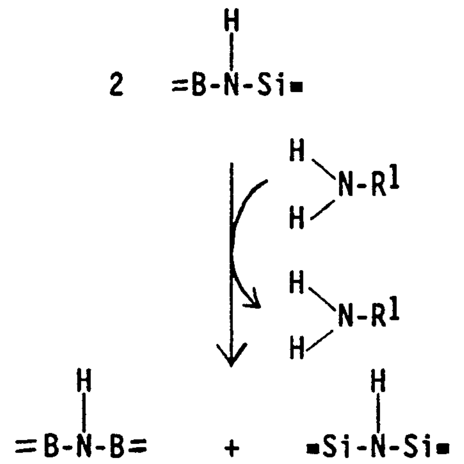

Cette réaction est opérée en masse à une température pouvant varier de la température ambiante à 200 °C ou est opérée, de préférence, dans un solvant organique de type aprotique (hexane, pentane, toluène, chlorobenzène, etc...) et sous des conditions anhydres.

La température de la réaction opérée dans un solvant est voisine de celle du reflux du solvant.

On peut également, toujours dans une étape ultérieure, traiter thermiquement le polymère obtenu (thermolyse) dans le but d'améliorer encore sa tenue à la pyrolyse, et donc son rendement pondéral en nitrure de bore. Cette thermolyse, généralement opérée en masse et à une température comprise entre 100 °C et 200 °C et de préférence sous atmosphère d'ammoniac, a pour effet de modifier la structure interne du polymère, probablement en augmentant son caractère réticulé, ce qui peut expliquer sa tenue thermique améliorée.

Les polymères à base de bore et d'azote susceptibles d'être obtenus selon l'invention présentent une masse molaire moyenne en nombre ( $\overline{M}$ n) qui peut être comprise entre 400 et 10 000, et de préférence comprise entre 600 et 5 000.

Ils présentent d'autre part une masse molaire moyenne en poids ( $\overline{M}$ w pouvant s'étaler entre 600 et 10 0000, et de préférence entre 700 et 10 000. L'indice de polydispersité (TP) est comprisentre 1,1 et 3 généralement.

Suivant les conditions de mise en oeuvre du procédé décrit ci-avant (rapport {silazane}/{trihalogénoborane}, chauffage à reflux, thermolyse,...), les polymères selon l'invention peuvent se présenter, à température ambiante, sous une forme allant d'une huile peu visqueuse à très visqueuse jusqu'à l'état solide.

A l'exception des polymères ayant subi une étape ultérieure de thermolyse, les polymères selon l'invention sont de plus fusibles et solubles dans la plupart des solvants organiques usuels (hexane, toluène,...), ce qui peut être très avantageux au niveau de leur possibilité de mise en forme.

On peut éventuellement éliminer en continu l'halogénosilane formé.

Les polymères à base de bore et d'azote selon l'invention trouvent une application toute particulière dans la fabrication de produits et articles céramiques contenant, au moins en partie, du nitrure de bore.

Dans le cas le plus général (obtention de poudres), on pyrolyse alors le polymère sous atmosphère d'ammoniac, à une température allant de 100 °C à 2 000 °C jusqu'à ce que le polymère soit converti entièrement en une céramique à base de nitrure de bore.

Le polymère, avant pyrolyse, peut également être mis en forme, par moulage ou par filage par exemple, pour aboutir finalement aux configurations les plus diverses telles que filaments, fibres, articles moulés, revêtements de support et autres. Dans le cas où l'on désire obtenir des fibres, le polymère est filé au moyen d'une filière classique (après fusion éventuelle si le polymère est initialement à l'état solide), puis est traité thermiquement à une température allant de 100 °C à 2 000 °C sous atmosphère d'ammoniac, pour donner une fibre en nitrure de bore.

Les fibres obtenues peuvent alors servir de structure de renforcement pour des matériaux composites du type céramique/céramique, céramique/métal, ou céramique/plastique.

Des exemples illustrant les divers aspects de l'invention vont maintenant être donnés. Dans tous ces exemples, la teneur résiduelle en chlore du précurseur céramique obtenu est inférieure à 0,5 % sauf à l'exemple comparatif 14.

## - EXEMPLE COMPARATIF 1 :

Dans un ballon tricol de un litre, sous azote, on introduit 352 g de toluène sec et 165 g (1,022 mole) d'hexaméthyldisilazane, on refroidit à -20 °C et on introduit ensuite 47,8 g (0,406 mole) de $BCl_3$ gaz, la température est maintenue entre -20 °C et -10 °C, durée de coulée : 1 heure. On laisse remonter à la température ambiante et on porte à reflux durant 17 heures. Il y a formation d'un précipité blanc, on filtre sous azote, on évapore sous vide le solvant et les légers, on laisse 50 minutes à 120 °C sous 0,9 KPa. On récupère 35,7 g d'une huile très visqueuse.

$\overline{M}$ n (masse moléculaire moyenne en nombre) = 670,

$\overline{M}$ w(masse moléculaire moyenne en poids) = 1 010,
Ip (indice de polydispersité) = 1,49.

- Pyrolyse sous ammoniac :

La pyrolyse sous ammoniac à 1 000 °C de cette huile conduit à une céramique totalement blanche, rendement de pyrolyse : 27,88 %.

Conditions de pyrolyse : 30 °C à 200 °C, 1 °C/mn (1 h) et 200 °C à 1 000 °C, 3 °C/mn (15 h).

Analyses élémentaires de la céramique finale (les % sont donnés en poids) :
C = 0,6 %
H = 0,49 %
O = 0,76 %
B = 35,97 %
Si = 5,60 %
N = 53,9 %

Les analyses spectrales RAMAN, ESCA et IR confirment l'obtention de nitrure de bore. L'analyse par diffraction aux rayons X d'échantillons pyrolysés à 1 500 °C sous azote montre la formation de nitrure de bore sous la forme cristalline hexagonale.

- Pyrolyse sous azote :

La pyrolyse sous azote à 1000 °C de l'huile précédente conduit à une céramique grise, rendement de pyrolyse : 27,1 %.

Conditions de pyrolyse identiques à celles de la pyrolyse sous ammoniac.

Analyses élémentaires de la céramique finale (les % sont donnés en poids) :
C = 2,5 %.

- EXEMPLE 2 :

Dans un ballon tricol de un litre, sous azote, on introduit 161,5 g (1,00 mole) d'hexaméthyldisilazane et 346 g de toluène sec, on porte à reflux et on introduit 45,2 g (0,385 mole) de $BCl_3$ gaz, on laisse à reflux durant 17 heures, il y a formation d'un précipité blanc, on filtre sous azote, on évapore sous vide le solvant et les légers, on traite la masse obtenue à 120 °C sous un vide de 0,5 KPa durant 2 heures. On récupère ainsi 26,3 g d'un solide blanc.
TGA (850 °C sous hélium) = 42,2% (TGA : analyse thermogravimétrique).

Le polymère obtenu a été pyrolysé sous atmosphère d'ammoniac dans les conditions de l'exemple comparatif 1. On obtient une céramique blanche de composition voisine à celle décrite dans l'exemple comparatif 1.

- EXEMPLE 3 :

Dans un ballon tricol de deux litres, sous azote, on introduit 323 g (2,00 moles) d'hexaméthyldisilazane et 690 g de toluène sec, on refroidi à -33 °C et on introduit 96 g (0,81 mole) de $BCl_3$ gaz, la température est maintenue entre -10 °C et -2 °C, durée de l'introduction 20 minutes. On laisse remonter à la température ambiante, et on porte à reflux durant 4 heures. Il y a formation d'un précipité blanc. On filtre sous azote, on évapore sous vide le solvant et les légers. La masse obtenue est traitée à 160 °C sous 0,9 KPa durant 1 heure. On récupère 75,5 g d'une huile incolore et visqueuse.
TGA (850 °C sous hélium) = 19,3 %.
Viscosité : 200 mPa.s à 120 °C.

Le polymère obtenu a été pyrolysé sous atmosphère d'ammoniac dans les conditions de l'exemple comparatif 1. On obtient une céramique blanche de composition voisine à celle décrite dans l'exemple comparatif 1.

- EXEMPLE 4 :

Dans un ballon tricol de deux litres, sous azote, on introduit 323 g (2,00 moles) d'hexaméthyldisilazane et 698 g de toluène sec, on refroidit à -25 °C et on introduit en 16 minutes, 111 g (0,944 mole) de $BCl_3$ gaz, la température est maintenue vers -20 °C. On porte ensuite à reflux durant 4 heures. Il y a formation d'un précipité blanc. On filtre sous azote, on évapore sous vide le solvant et les légers. La masse obtenue est traitée à 160 °C durant 1 heure sous un vide de 0,9 KPa. On récupère 83 g d'une huile limpide très visqueuse.
TGA (850 °C sous hélium) = 26,9 %.

Le polymère obtenu a été pyrolysé sous atmosphère d'ammoniac dans les conditions de l'exemple comparatif 1. On obtient une céramique blanche de composition voisine à celle décrite dans l'exemple comparatif 1.

- EXEMPLE 5 :

Dans un ballon tricol de deux litres, sous azote, on introduit 325 g (2,01 moles) d'hexaméthyldisilazane et 700 g de toluène sec. On refroidit à -25 °C et on introduit en 10 minutes, 79 g (0,672 mole) de $BCl_3$ gaz, la température est maintenue vers -20 °C. On porte ensuite à reflux durant 4 heures. Il y a formation d'un précipité blanc. On filtre sous azote, on évapore sous vide le solvant et les légers. La masse obtenue est traitée à 160 °C durant 1 heure sous un vide de 8 KPa. On récupère 62 g d'une huile limpide très visqueuse.
TGA (850 °C sous hélium) = 16,3 %.
Viscosité : 60 mPa.s à 120 °C.

Le polymère obtenu a été pyrolysé sous atmosphère d'ammoniac dans les conditions de l'exemple comparatif 1. On obtient une céramique blanche de composition voisine à celle décrite dans l'exemple comparatif 1.

- EXEMPLE 6 :

Dans un réacteur de deux litres, sous azote, on introduit à température ambiante 692 g de toluène sec et 323 g (2,00 moles) d'hexaméthyldisilazane. On refroidit à 0 °C et on introduit lentement 95 g (0,808 mole) de $BCl_3$ gaz. La température est maintenue vers +3 °C. On porte ensuite à reflux durant 4 heures. Il y a formation d'un précipité blanc. On filtre sous azote, on évapore sous vide le solvant et les légers. La masse obtenue est traitée à 160 °C durant 1 heure sous vide de 8 KPa. On récupère 77,2 g d'une huile limpide très visqueuse.
TGA (850 °C sous argon) : 26,1 %

Le polymère obtenu a été pyrolysé sous atmosphère d'ammoniac dans les conditions de l'exemple comparatif 1. On obtient une céramique blanche de composition voisine à celle décrite dans l'exemple comparatif 1.

- EXEMPLE 7 :

Dans un réacteur de deux litres, sous azote, on introduit à température ambiante 743 g de toluène sec et 324 g (2,00 moles) d'hexaméthyldisilazane. On refroidit à -50 °C et on introduit en 11 minutes, 95 g (0,808 mole) de $BCl_3$ gaz. La température est maintenue vers -25 °C. On porte ensuite à reflux durant 17 heures. Il y a formation d'un précipité blanc. On filtre sous azote, on évapore sous vide le solvant et les légers. La masse obtenue est traitée à 160 °C durant 1 heure sous vide de 8 KPa. On récupère 60,6 g d'une huile limpide très visqueuse.
TGA (850 °C sous argon) : 32,8 %
Viscosité : 2 500 mPa.s à 140 °C.

Le polymère obtenu a été pyrolysé sous atmosphère d'ammoniac dans les conditions de l'exemple comparatif 1. On obtient une céramique blanche de composition voisine à celle décrite dans l'exemple comparatif 1.

- EXEMPLE 8 :

Dans un réacteur de deux litres, sous azote, on introduit à température ambiante 706 g de toluène sec, puis on additionne simultanément en 50 minutes 197 g d'hexaméthyldisilazane (1,22 mole) et 57 g de $BCl_3$ gaz (0,485 mole) dans la phase liquide, à une température d'environ 25 °C. On porte ensuite le mélange à reflux durant 16 heures.

Après filtration sous azote et évaporation sous vide on récupère 41 g d'une huile fortement visqueuse.

Les caractéristiques du polymère obtenu sont les suivantes :
TGA (850 °C sous hélium) = 18 %.
$\overline{M}n$ = 630
$\overline{M}w$ = 780
Ip = 1,23

Le polymère obtenu a été pyrolysé sous atmosphère d'ammoniac dans les conditions de l'exemple comparatif 1. On obtient une céramique blanche de composition voisine à celle décrite dans l'exemple comparatif 1.

- EXEMPLE 9 :

Dans un ballon de deux litres séché sous azote, on charge 680 ml de toluène sec, puis on coule en 1 heure 45 minutes 330 g d'hexaméthyldisilazane (2,04 moles) à une température de 27 °C. Simultanément et pendant la même durée on additionne au mélange 80 g de $BCl_3$ gaz (0,68 mole). Le mélange réactionnel est ensuite porté à reflux pendant une durée de 4 heures 15.

Après filtration sous azote et évaporation sous vide on récupère 78 g d'une huile limpide et incolore peu visqueuse.

Les caractéristiques du polymère obtenu sont les suivantes :
TGA (850 °C sous hélium) = 18,8 %.
$\overline{M}n$ = 730
$\overline{M}w$ = 1 030
Ip = 1,41
Viscosité : 140 mPa.s à 120 °C, 10 000 mPa.s à 60 °C.

Le polymère obtenu a été pyrolysé sous atmosphère d'ammoniac dans les conditions de l'exemple comparatif 1. On obtient une céramique blanche de composition voisine à celle décrite dans l'exemple comparatif 1.

- EXEMPLE 10 :

Dans un réacteur de 2 litres séché sous azote, on introduit à température ambiante 620 g de toluène sec. On additionne ensuite simultanément à une température de 25 °C, 117,5 g de $BCl_3$ gaz (1,00 mole) et 333 g d'hexaméthyldisilazane (2,06

moles) pendant une durée de 1 heure 45 minutes.

En fin d'addition, le mélange est chauffé à reflux pendant une durée de 4 heures.

Après filtration sous azote et évaporation sous vide, on récupère 86 g d'un polymère solide blanc de caractéristiques suivantes :

TGA (850 °C sous hélium) : 38,5 %

Température de ramollissement = 160 °C.

Le polymère obtenu a été pyrolysé sous atmosphère d'ammoniac dans les conditions de l'exemple comparatif 1. On obtient une céramique blanche de composition voisine à celle décrite dans l'exemple comparatif 1.

## - EXEMPLE 11 :

Dans un réacteur de 2 litres séché sous azote, on introduit 606 g de toluène sec. On additionne simultanément à une température de 25 °C, 106 g de $BCl_3$ gaz (0,902 mole) et 323 g (2,00 moles) d'hexaméthyldisilazane pendant une durée de 1 heure.

En fin d'addition, le mélange est chauffé à reflux pendant 4 heures.

Après filtration sous azote et évaporation sous vide, on récupère 77,3 g d'un polymère solide blanc.

TGA (850 °C sous hélium) : 35,67 %

Température de fusion : 110-130 °C

$\overline{M}n$ = 1 180

$\overline{M}w$ = 2 350

Ip = 1,99.

Le polymère obtenu a été pyrolysé sous atmosphère d'ammoniac dans les conditions de l'exemple comparatif 1. On obtient une céramique blanche de composition voisine à celle décrite dans l'exemple comparatif 1.

15,6 g du polymère obtenu précédemment est dissous dans 85 ml de toluène sec ; on porte à reflux et on introduit lentement de l'ammoniac (durée de l'introduction : 1 heure). Après avoir évaporé le solvant, on récupère 12,2 g d'un solide blanc.

TGA (850 °C sous hélium) : 49 %

Température de fusion : supérieure à 250 °C.

L'analyse GPC des distillations montre la formation d'hexaméthyldisilazane, ce qui confirme la théorie scientifique énoncée ci-dessus.

## - EXEMPLE 12 :

Dans un réacteur de 2 litres séché sous azote, on introduit 596 g de toluène sec. On additionne simultanément à une température de 23 °C, 79,3 g (0,671 mole) de $BCl_3$ gaz et 273 g (1,69 mole) d'hexaméthyldisilazane pendant une durée de 2 heures 30 ; on élimine ensuite en 1 heure 30 le maximum de $Me_3SiCl$, on porte ensuite à reflux pendant 2 heures 30 ; on récupère 204 g de $Me_3SiCl$.

Après filtration sous azote et évaporation sous vide, on récupère 67 g d'une huile limpide très visqueuse.

TGA (850 °C sous hélium) : 29,51

$\overline{M}n$ = 800

$\overline{M}w$ = 1 170

Ip = 1,66.

Le polymère obtenu a été pyrolysé sous atmosphère d'ammoniac dans les conditions de l'exemple comparatif 1. On obtient une céramique blanche de composition voisine à celle décrite dans l'exemple comparatif 1.

## - EXEMPLE 13 :

Dans un réacteur de 2 litres séché sous azote, on introduit 717 g de toluène sec et 326 g (2,01 moles) d'hexaméthyldisilazane ; on refroidit à -30 °C et on coule en 13 minutes, 96 g (0,817 mole) de $BCl_3$ gaz ; la température est maintenue vers -30 °C, il y a formation d'un précipité blanc. On élimine ensuite en 4 heures le $Me_3SiCl$ formé.

Après filtration sous azote et évaporation sous vide du solvant et des légers, la masse obtenue est traitée durant 1 heure à 160 °C sous vide de 8 KPa. On récupère 54 g d'une huile très visqueuse.

TGA (850 °C sous hélium) : 29,6 %.

Le polymère obtenu a été pyrolysé sous atmosphère d'ammoniac dans les conditions de l'exemple comparatif 1. On obtient une céramique blanche de composition voisine à celle décrite dans l'exemple comparatif 1.

## - EXEMPLE COMPARATIF 14 :

Dans un réacteur de 2 litres séché sous azonte, on introduit 350 g de toluène sec et 161,5 g (1,00 mole) d'hexaméthyldisilazane, on refroidit à -28 °C et on introduit 86 g (0,73 mole) de $BCl_3$ gaz ($R_a$ = 1,37). On porte à reflux pendant 17 heures, il y a formation d'un précipité blanc.

On filtre sous azote. La filtration sous azote est très difficile (4 jours). On évapore sous vide le solvant et les légers. On récupère 20 g d'un solide très hygroscopique ayant une teneur résiduelle en chlore supérieure à 2 %.

## - EXEMPLE 15

Dans un ballon tricol de 2 litres, sous azote, on introduit 323 g (2,00 moles) d'hexaméthyldisilazane

et 701 g de toluène sec, on refroidit à 25° C et on introduit 111 g (0,944 mole) de $BCl_3$ gaz en 20 minutes.

La température est maintenue à -25° C.

On porte à reflux durant 5 heures, il y a formation d'un précipité blanc.

On filtre sous azote, on évapore sous vide le solvant et les légers. La masse obtenue est traitée 1 heure à 160° C sous vide.

On récupère 78,8 g d'un solide translucide légèrement collant.
Température de ramollissement : 80° C.
Température de fusion : 105° C.

Dans un ballon tricol de 2 litres, sous azote, on introduit 48,8 g du produit obtenu précédemment avec 705 g de toluène sec, on porte à reflux et on ajoute 5 g d'ammoniac gaz en 20 minutes.

On obtient une solution limpide, on évapore sous vide et on traite la masse 1 heure à 160° C sous vide. On récupère 45,4 g d'un solide blanc sous forme de paillettes.
Température de ramollissement : 140° C.
Température de fusion : 210° C.

- EXEMPLE 16 :

Dans un ballon tricol de 50 ml, sous azote, on introduit 6 g du polymère obtenu dans l'exemple 15 et ayant une température de ramollissement de 80° C, on porte à 100° C à l'aide d'un bain d'huile et on laisse 1 heure sous balayage d'ammoniac gaz.

On obtient 5,85 g d'un solide blanc.
Température de ramollissement : 110° C.
Température de fusion : 210° C

Mêmes conditions de mise en oeuvre, sauf que le polymère, obtenu dans l'exemple 15 et ayant une température de ramollissement de 80° C, est laissé 1 heure à 100° C sous balayage d'azote sec.

On récupère un solide blanc.
Température de ramollissement : 80° C. Température de fusion : 170° C.

- EXEMPLE 17 :

Dans un ballon tricol de 50 ml, sous azote, on introduit le polymère obtenu dans l'exemple 15 et ayant une température de ramollissement de 80° C dans du toluène sec, on porte à 180° C à l'aide d'un bain d'huile et on laisse 15 minutes sous balayage d'ammoniac gaz sec.

On récupère une mousse blanche.
Température de ramollissement : 130° C.
Température de fusion : 215° C

Mêmes conditions de mise en oeuvre, sauf que le polymère, obtenu dans l'exemple 15 et ayant une température de ramollissement de 80° C, est laissé 15 minutes sous balayage d'azote sec.

On récupère un solide blanc légèrement moussé en surface.
Température de ramollissement : 115° C.
Température de fusion : 175° C.

## Revendications

1. - Procédé de préparation de produit céramique à base de nitrure de bore, caractérisé en ce qu'il consiste à pyrolyser à une température comprise entre 1000° C et 2 000° C un polymère à base de bore et d'azote obtenu par réaction d'au moins un composé silazane (A) présentant au moins un groupement ≡Si - NH - Si≡ par molécule sur au moins un trihalogénoborane (B) suivant un rapport Ra nombre d'équivalent-gramme de groupement ≡Si - NH - Si≡ de (A) sur nombre de mole de (B), supérieur ou égal à 2 et en ce que (B) est coulé progressivement dans la totalité de (A), ou (B) est coulé simultanément avec (A).

2. - Procédé selon la revendication 1, caractérisé en ce que la réaction s'effectue en masse.

3. - Procédé selon la revendication 1, caractérisé en ce que la réaction s'effectue en solution dans un solvant organique aprotique anhydre.

4. - Procédé selon l'une quelconque des revendications précédentes, caractérisé en ce que le trihalogénoborane est le trichloroborane.

5. - Procédé selon l'une quelconque des revendications précédentes, caractérisé en ce que l'on utilise des quantités de réactifs correspondant à un rapport Ra compris entre 2,1 et 5

6. - Procédé selon la revendication 3, caractérisé en ce que la température de réaction est comprise entre -50° C et la température de reflux du solvant.

7. - Procédé selon l'une quelconque des revendications précédentes, caractérisé en ce que ledit composé silazane répond aux formules (I) ou (II) suivantes :

$H_2N(R_2\ SiNH)_p\ SiR_2NH_2$ (I)
$R_3SiNH(R_2\ SiNH)_{p'}\ SiR_3$ (II)

dans lesquelles les radicaux R, identiques ou différents, sont choisis parmi l'hydrogène et les radicaux alkyles, cycloalkyles, aryles, alkylaryles et arylalkyles ; p et p' sont des nombres entiers pouvant être compris entre 1 et 1000, de préférence entre 3 et 300.

8. - Procédé selon l'une quelconques des revendications 1 à 6, caractérisé en ce que ledit composé silazane est cyclique et qu'il répond à la formule (III) suivante :

$(R_2SiNH)_n$ (III)

dans laquelle les radicaux R, identiques ou différents, sont choisis parmi l'hydrogène et les radicaux alkyles, cycloalkyles, aryles, alkylaryles et arylalkyles ; n est un nombre entier compris entre 3 et 10, de préférence égal à 3 ou 4.

9. - Procédé selon l'une quelconque des revendications 1 à 6, caractérisé en ce que ledit composé silazane répond à la formule générale (IV) suivante :

$(R_3Si)_2NH$ (IV)

dans laquelle les radicaux R, identiques ou différents, représentent l'atome d'hydrogène ou des radicaux hydrocarbonés, éventuellement substitués, choisis parmi les radicaux alkyles, cycloalkyles, aryles, alkylaryles, arylalkyles et alcényles.

10. - Procédé selon la revendication 9, caractérisé en ce que R représente l'atome d'hydrogène, un radical alkyle ou vinyle.

11. - Procédé selon la revendication 10, caractérisé en ce que l'on utilise un hexaalkyldisilazane.

12. - Procédé selon la revendication 11, caractérisé en ce que l'on utilise l'hexamethyldisilazane.

13. - Procédé selon l'une quelconque des revendications précédentes caractérisé en ce que lesdits polymères à base de bore et d'azote sont ultérieurement traités par un composé de formule :

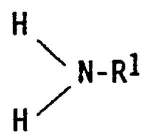

dans laquelle $R^1$ représente un radical alkyle, ôu de préférence, l'atome d'hydrogène.

14. -Procédé selon la revendication 13, caractérisé en ce que cette réaction est opérée en masse à une température pouvant varier de la température ambiante à 200 °C.

15. - Procédé selon la revendication 13, caractérisé en ce que cette réaction est opérée dans un solvant organique de type aprotique sous conditions anhydres à une température voisine de celle du reflux du solvant.

16. - Procédé selon l'une quelconque des revendications précédentes caractérisé en ce que lesdits polymères à base de bore et d'azote sont ultérieurement traités thermiquement entre 100 °C et 200 °C en vue d'améliorer leur tenue à la pyrolyse.

17. - Procédé selon l'une quelconque des revendications précédentes, caractérisé en ce qu'on pyrolyse le polymère sous atmosphère d'ammoniac, à une température allant de 1 000 °C à 2 000 °C.

18. - Procédé selon la revendication 17, caractérisé en ce que, préalablement à ladite pyrolyse, ledit polymère est mis sous une forme choisie parmi une fibre, un revêtement et un article moulé.

19. - Produit céramique à base de nitrure de bore susceptible d'être obtenu selon un procédé tel que défini aux revendications 18 et 17.

Office européen des brevets

# RAPPORT DE RECHERCHE EUROPEENNE

Numero de la demande

EP 90 42 0174

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-A-3 729 191 (WACKER-CHEMIE GMBH)<br>* le document en entier *<br>--- | 1,3-12, 15,18, 19 | C 04 B 35/58<br>C 08 G 79/08 |
| A | EP-A-0 278 734 (ULTRASYSTEMS DEFENSE AND SPACE, INC.)<br>* le document en entier *<br>--- | 1,9,11, 12,14-19 | |
| D,A | INORGANIC AND NUCLEAR CHEMISTRY LETTERS vol. 2, no. 7, juillet 1966, pages 201-204, Pergamon Press, Oxford, GB; R.L. WELLS et al.: "The preparation of an unsymmetrical trisaminoborane containing a primary amino group" * le document en entier *<br>--- | 1,3,4,6,7,9-12 | |
| A | EP-A-0 310 462 (RHONE-POULENC)<br>* le document en entier *<br>----- | 1,18 | |

DOMAINES TECHNIQUES RECHERCHES (Int. Cl.5)

C 04 B 35/00
C 08 G 79/00

Le présent rapport a été établi pour toutes les revendications

| Lieu de la recherche | Date d'achèvement de la recherche | Examinateur |
|---|---|---|
| BERLIN | 28-06-1990 | HOEPFNER W.W.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)